Europäisches Patentamt

European Patent Office

Office européen des brevets

(19)

(11) Veröffentlichungsnummer: **0 121 927**
**B1**

(12) **EUROPÄISCHE PATENTSCHRIFT**

(45) Veröffentlichungstag der Patentschrift:
**18.01.89**

(51) Int. Cl.⁴: **H 04 M 1/66, H 04 M 17/02**

(21) Anmeldenummer: **84103958.9**

(22) Anmeldetag: **09.04.84**

(54) **Bedienteil für ein Autotelefon.**

(30) Priorität: **12.04.83 DE 3313146**

(43) Veröffentlichungstag der Anmeldung:
**17.10.84 Patentblatt 84/42**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**EP-A- 0 063 689**
**AT-B- 348 596**
**DE-A- 2 807 550**
**FR-A- 2 305 075**
**US-A- 3 581 019**

(73) Patentinhaber: **Siemens Aktiengesellschaft Berlin und München, Wittelsbacherplatz 2, D-8000 München 2 (DE)**

(72) Erfinder: **Nothnagel, Gerd, Ing.-grad., Geroltstrasse 36, D-8000 München 2 (DE)**
Erfinder: **Käo, Tönis Industrie-Designer grad., Dal'Armlstrasse 17, D-8000 München 19 (DE)**
Erfinder: **Ende, Klaus, Ing.-grad., Sudetenstrasse 68, D-8034 Germering (DE)**

**Beschreibung**

Die Erfindung bezieht sich auf ein Bedienteil für ein Autotelefon mit Vorrichtungen zur Aufnahme einer Identitätskarte, wie es aus der US-A-3 581 019 bekannt ist. Die Identitätskarte soll neben der Teilnehmer-Nummer auch einen Berechtigungscode enthalten, um sicherzustellen, dass das Autotelefon nur von Berechtigten benutzt wird. Ferner sollen über die Identitätskarte die anfallenden Gebühren angezeigt und abgerechnet werden für den Fall, dass das Autotelefon selbst nicht nummergebunden ist.

Der Erfindung liegt die Aufgabe zugrunde, ein Bedienteil einfachen und platzsparenden Aufbaus zu schaffen, in dem die genannten Funktionen erfüllt werden.

Diese Aufgabe wird gemäss der Erfindung gelöst mit einem Bedienteil aus einem Handapparat (Handset) mit in diesem integrierten Wähl- und Anzeigeeinrichtungen, die an dessen Oberseite in entsprechenden Feldern angeordnet sind, und durch eine Ablage flacher, im Auflagebereich den Konturen des Handapparates angepasster Gestalt für den Handapparat, in der eine Aufnahme und eine Lesevorrichtung für die Identitätskarte angebracht sind.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

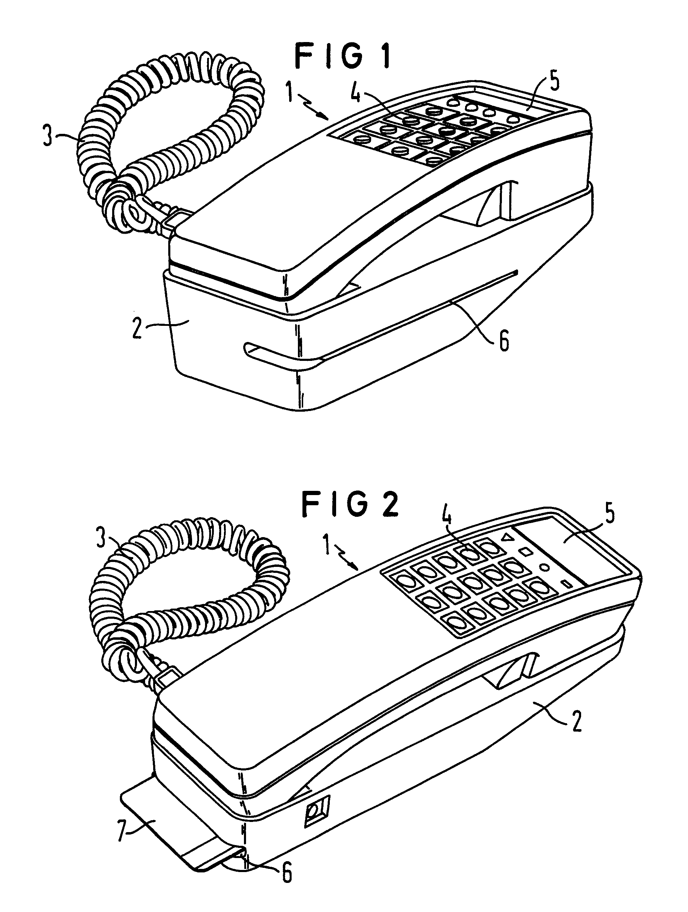

Die Figuren 1 bis 4 zeigen verschiedene Ausführungsformen eine Bedienteils.

Das Bedienteil nach Fig. 1 besteht aus einem Handapparat 1 (Handset), dem eine Hörerablage 2 zugeordnet ist. Beide sind über ein Anschlusskabel 3 miteinander verbunden. Der Handapparat enthält alle elektrischen Einrichtungen des Telefons einschliesslich der Wähl- und Anzeigeeinrichtungen. Die Wähl- und Anzeigeeinrichtungen 4, 5 sind als Tastenfelder und Leuchtanzeigen auf der Oberseite in speziellen Feldern angeordnet.

Die Handapparatablage 2 ist von flacher Gestalt und in ihrer Grösse und im Auflagebereich den Konturen des Handapparates 1 angepasst. Die Ablage 2 für den Handapparat 1 weist eine Aufnahme für eine Identitätskarte sowie eine Lesevorrichtung für diese Karte auf. Die Aufnahme für die Identitätskarte ist dabei als Schlitz 6 ausgebildet, der sich über einen etwa der Länge und Breite der Identitätskarte entsprechenden Teil der Längs- und Breitseite der Ablage 2 erstreckt. Zum Lesen wird die Identitätskarte in das vordere Ende des Schlitzes eingeschoben, wobei ein Schalter (in der Figur nicht sichtbar) zur Aktivierung des Autotelefons betätigt wird. Zum Lesen der auf der Identitätskarte codierten Informationen wird diese voll in den Schlitz 6 eingeschoben.

Figur 2 zeigt eine Ausführungsbeispiel eines Bedienteils, das in seinem Grundaufbau dem nach Fig. 1 entspricht. Es ist also ebenfalls ein Handapparat 1 vorgesehen, der alle elektrischen Einrichtungen des Telefons enthält und an dessen Oberseite Anzeigeeinrichtungen 5 und Wähleinrichtungen 4 (Wähltastatur) in speziellen Feldern angeordnet sind. Der Handapparat 1 ist auf einer hinsichtlich der Grösse und Auflagefläche dem Handapparat angepassten Ablage 2 aufgelegt und mit dieser über ein Anschlusskabel 3 verbunden. An der vorderen Stirnseite der Ablage 2 ist ein Schlitz 6 angebracht, in den eine Identitätskarte 7 eingesteckt wird. Diese ragt nur so weit aus der Ablage heraus, wie zum Herausziehen nötig ist. Mittels einer in der Ablage 2 angeordneten Lesevorrichtung werden Identität und Berechtigung des Teilnehmers zur Führung eines Telefongesprächs festgestellt.

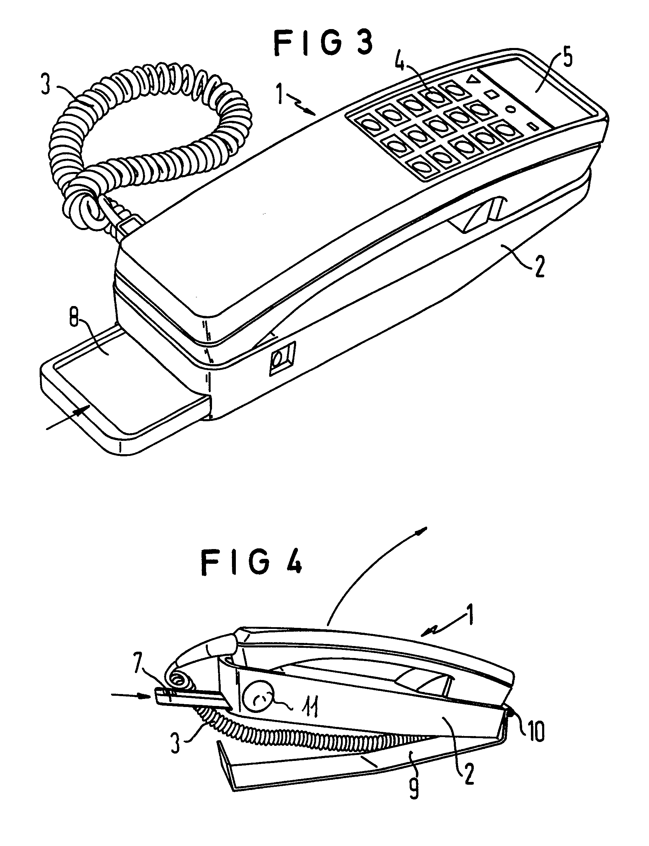

Das Ausführungsbeispiel nach Figur 3 entspricht im wesentlichen dem vorstehend beschriebenen Ausführungsbeispiel nach Fig. 2. Unterschiedlich hierbei ist lediglich, dass an der vorderen Stirnseite der Ablage 2 anstelle eines schmalen Schlitzes zur Aufnahme der Identitätskarte eine grössere Öffnung für eine herausziehbare Lade 8 vorgesehen ist, in die die Identitätskarte 7 hineingelegt wird. Beim Einschieben der Lade 8 wird die Identitätskarte 7 an einer entsprechend gelagerten Leseeinrichtung vorbeigeschoben. Nach dem Schliessen der Lade 8 ist die Identitätskarte vollständig verdeckt und gegen Zerstörung und Verstauben geschützt. Die Lade 8 kann im Bedarfsfall auch mit einem Sicherheitsschloss verriegelt werden, so dass das Autotelefon vor unberechtigter Benutzung geschützt ist.

Die Ausführungsform des Bedienteils nach Fig. 4 enthält ebenfalls einen Handapparat 1 mit integrierter Wähl- und Anzeigeeinrichtung und den zugehörigen elektrischen Schalteinrichtungen sowie eine Ablage 2 für den Handapparat 1 mit einer Aufnahme für eine Identitätskarte und einer Lesevorrichtung für diese. Handapparat 1 und Ablage 2 sind über ein Anschlusskabel 3 miteinander verbunden.

Zur Aufnahme der Handapparatablage 2 ist eine Bodenwanne 9 vorgesehen. Diese besteht im Ausführungsbeispiel aus einer Grundplatte und an den Schmalseiten hochgezogenen Seitenwänden. Entsprechend hochgezogene Seitenwände können aber auch an den Längsseiten vorgesehen werden, so dass die Ablage 2 längs des gesamten Umfanges von der Bodenwanne umschlossen ist.

Die Hörerablage 2 ist über ein Scharnier 10 mit der Bodenwanne 9 gelenkartig verbunden. Dieses Scharnier 10 ist an der hinteren Stirnseite der Ablage 2 oben und an der hinteren hochgezogenen Seitenwand der Bodenwanne 9 befestigt. An der vorderen, dem Scharnier 10 gegenüberliegenden Stirnseite der Handapparatablage 2 befindet sich der Schlitz zur Aufnahme der Identitätskarte 7. Der Aufbau von Handapparat 1 und Ablage 2 entspricht dabei im wesentlichen der Ausführungsform nach Figur 2.

Vor dem Einschieben der Identitätskarte 7 in den Schlitz wird die Ablage 2 einschliesslich des auf ihr aufliegenden Handapparates 1 nach oben (in Pfeilrichtung) aus der Bodenwanne 9 herausgeschwenkt, bis der Schlitz in die für den Benutzer vorteilhafteste Lage kommt. In dieser Lage wird die Identitätskarte 7 in den Schlitz eingeschoben und die Ablage 2 auf die Bodenwanne 9 zurückgeschwenkt und eingerastet. Dabei greift die vordere Seitenwand der Bodenwanne 9 schützend so über das mit der Identitätskarte versehene Ende der Ablage 2, dass diese vollständig verdeckt wird. Auch hierbei kann zusätzlich eine Verriegelung mittels eines Schlosses vorgesehen werden, die ein unberechtigtes Öffnen des Bedienteiles verhindert. Zum Anheben der Ablage 2 sind in deren Längsseite im vorderen Bereich Vertiefungen 11 zum Eingreifen der Finger vorgesehen. Über die Bodenwanne 9 wird das Bedienteil an der gewünschten Stelle im Fahrzeug befestigt.

**Patentansprüche**

1. Bedienteil für ein Autotelefon mit Vorrichtungen zur Aufnahme einer Identitätskarte, gekennzeichnet durch einen Handapparat (Handset) mit in diesem integrierten Wähl- und Anzeigeeinrichtungen, die an dessen Oberseite in entsprechenden Feldern angeordnet sind, und durch eine Ablage flacher, im Auflagebereich den Konturen des Handapparates angepasster Gestalt für den Handapparat, in der eine Aufnahme und eine Lesevorrichtung für die Identitätskarte angebracht sind.

2. Bedienteil nach Anspruch 1, dadurch gekennzeichnet, dass die Ablage an einer Längsseite einen Schlitz aufweist, dessen Tiefe der Breite der Identitätskarte entspricht.

3. Bedienteil nach Anspruch 1, dadurch gekennzeichnet, dass die Ablage an der Stirnseite einen Schlitz aufweist, dessen Tiefe geringfügig geringer ist als die Länge der Identitätskarte.

4. Bedienteil nach Anspruch 1, dadurch gekennzeichnet, dass die Ablage an der Stirnseite eine nach vorn herausziehbare Lade zur Aufnahme der Identitätskarte aufweist.

5. Bedienteil nach Anspruch 1, dadurch gekennzeichnet, dass die Ablage an einer Stirnseite gelenkartig mit einer die Ablage seitlich umschliessenden Bodenwanne verbunden ist und an der gegenüberliegenden Stirnseite im unteren, in die Bodenwanne eintauchenden Bereich einen Schlitz zur Aufnahme der Identitätskarte aufweist.

6. Bedienteil nach Anspruch 4 oder 5, dadurch gekennzeichnet, dass eine Verriegelung, beispielsweise ein Schloss, für die Vorrichtung zur Aufnahme der Identitätskarte vorgesehen ist.

**Claims**

1. Control equipment for a car telephone having devices for receiving an identity card, characterized by a handset with dialling and display facilities integrated therein arranged on the top side of the handset in corresponding fields, and by a cradle, which is of flat design and is matched to the contours of the handset in the contact region, for the handset, in which cradle a receptacle and a read device for the identity card are arranged.

2. Control equipment according to Claim 1, characterized in that the cradle has on one longitudinal side a slot whose depth corresponds to the width of the identity card.

3. Control equipment according to Claim 1, characterized in that the cradle has on the end face a slot whose depth is slightly less than the length of the identity card.

4. Control equipment according to Claim 1, characterized in that the cradle has on the end face a drawer which can be pulled out to the front for receiving the identity card.

5. Control equipment according to Claim 1, characterized in that the cradle is connected on one end face in a hinge-like manner to a base pan laterally surrounding the cradle and, on the opposite end face in the lower region dipping into the base pan, has a slot for receiving the identity card.

6. Control equipment according to Claim 4 or 5, characterized in that a locking mechanism, for example a lock, is provided for the device for receiving the identity card.

**Revendications**

1. Unité de commande pour un radiotéléphone comportant des dispositifs pour recevoir une carte d'identification, caractérisée par un combiné dans lequel sont intégrés des dispositifs de sélection et d'affichage disposés sur la face supérieure du combiné, dans des zones correspondantes, et par une console de support du combiné, qui possède une forme plante adaptée aux contours du combiné dans la zone d'appui et dans laquelle sont logés un dispositif de réception et un dispositif de lecture pour la carte d'identification.

2. Unité de commande suivant la revendication 1, caractérisée par le fait que la console de support possède, sur son côté longitudinal, une fente, dont la profondeur correspond à la largeur de la carte d'identification.

3. Unité de commande suivant la revendication 1, caractérisée par le fait que la console de support possède, au niveau de sa face frontale, une fente dont la profondeur est légèrement inférieure à la longueur de la carte d'identification.

4. Unité de commande suivant la revendication 1, caractérisée par le fait que la console de support possède, sur sa face frontale, une tirette pouvant être ressortie vers l'avant et servant à recevoir la carte d'identification.

5. Unité de commande suivant la revendication 1, caractérisée par le fait que la console de support est reliée par articulation, au niveau de sa face frontale, à une coque de support entourant latéralement la console et comporte, dans sa partie inférieure qui s'engage dans la coque de support, une fente servant à recevoir la carte d'identification.

6. Unité de commande suivant la revendication 4 ou 5, caractérisée par le fait qu'un système de verouillage, par exemple un verrou, est prévu pour le dispositif servant à recevoir la carte d'identification.

# FIG 1

# FIG 2

# FIG 3

# FIG 4